# EUROPEAN PATENT APPLICATION

(11) **EP 4 618 253 A1**
(43) Date of publication of application: **17.09.2025**
(21) Application number: 24860175.9
(22) Date of filing: 16.07.2024
(51) Int. Cl.: H01M 10/6567, H01M 10/6556, H01M 10/6568, H01M 10/613, H01M 10/42, H01M 50/211, H01M 50/244, H01M 50/24, H01M 50/60

(54) **BATTERY PACK HAVING IGNITION DELAY STRUCTURE**

(30) Priority: 25.08.2023 KR 20230112096
(71) Applicant: LG Energy Solution, Ltd., Seoul 07335 (KR)
(72) Inventor: JANG, Seokho, Daejeon 34122 (KR)
(74) Representative: Plasseraud IP
(86) International application number: PCT/KR2024/010197
(87) International publication number: WO 2025/048254

(57) **Abstract**

A battery pack having an ignition delay structure including one or more battery modules, a housing accommodating the battery modules, a cooling portion configured to cool the battery modules as a coolant flows, and a spray portion configured to spray the coolant to the battery modules is provided.

## Description

### TECHNICAL FIELD

The present disclosure relates to a battery pack, and more specifically, to a battery pack having an ignition delay structure utilizing a coolant.

### BACKGROUND

Unlike primary batteries, which cannot be recharged, secondary batteries refer to batteries that may be charged and discharged, and they are applied not only to portable devices but also to electric vehicles ("EVs") and hybrid vehicles ("HEVs") that are driven by an electrical drive source.

Types of secondary batteries currently in wide use may include lithium ion batteries, lithium polymer batteries, nickel cadmium batteries, nickel hydrogen batteries, and nickel zinc batteries. An operating voltage of such a unit secondary battery cell, that is, a unit battery cell, is approximately 2.5V to 4.6V. Accordingly, when a higher output voltage is required, a battery pack is formed by connecting multiple battery cells in series. Additionally, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

When configuring a battery pack by connecting a plurality of battery cells in series/parallel, generally, a battery module consisting of at least one battery cell, preferably a plurality of battery cells, is first constructed, and a battery pack is constructed by using at least one such battery module and adding other components. Here, the battery module refers to a component in which multiple battery cells are connected in series or parallel, and the battery pack refers to a component in which multiple battery modules are connected in series or parallel to increase capacity, output and the like.

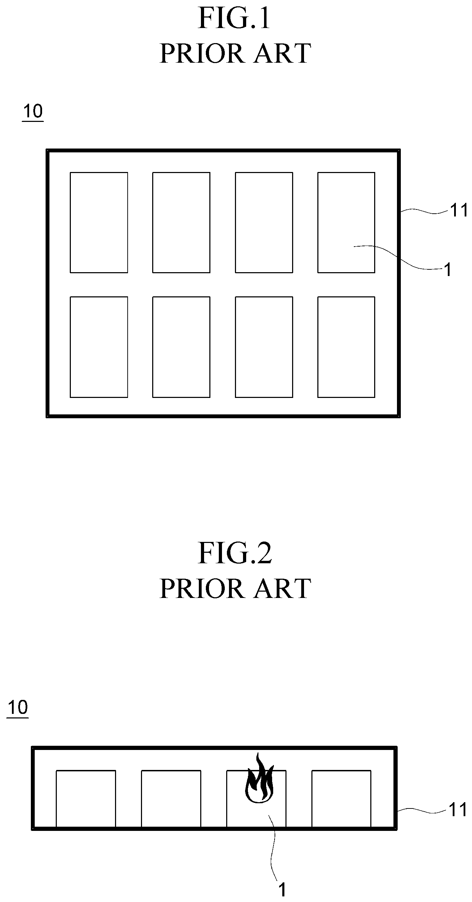

Typically, a battery pack 10 has a structure in which multiple battery modules 1 are accommodated in a pack housing 11, as illustrated in FIG. 1, and in order to maintain structural stability, multiple battery modules 1 or battery module assemblies may generally be arranged on the same plane.

However, in such a battery pack 10, in the case of overcharging and the like, an explosion or fire may occur due to swelling of the battery module 1, and such an explosion or fire may cause a greater risk of causing casualties.

Accordingly, as illustrated in Fig. 2, a method to provide a battery pack that may delay ignition and prevent chain ignition when some battery modules 1 in the battery pack 10 ignite is required.

### SUMMARY

### [TECHNICAL OBJECTIVES]

The present disclosure is directed to providing a battery pack having an ignition delay structure capable of delaying a heat transfer speed and preventing chain ignition of adjacent battery modules when some battery modules in a battery pack ignite.

### [TECHNICAL MEANS]

A battery pack having an ignition delay structure according to the present disclosure includes one or more battery modules; a housing accommodating the battery modules; a cooling portion configured to cool the battery modules as a coolant flows; and a spray portion configured to spray the coolant to the battery modules.

Furthermore, the battery pack having the ignition delay structure may further include a coolant inlet through which the coolant is introduced into the battery pack; and a coolant outlet through which the coolant is discharged from the battery pack.

Furthermore, the coolant inlet and the coolant outlet may each be disposed in the housing.

Furthermore, the coolant may flow into the cooling portion in a normal state, and in a case of event including ignition, the coolant may not be introduced into the cooling portion and flow into the spray portion.

Furthermore, the cooling portion may include a cooling passage through which the coolant flows, and the spray portion may include a spray passage through which the coolant flows.

Furthermore, the battery pack having the ignition delay structure may further include a valve configured to selectively supply the coolant from the coolant inlet to the cooling passage or the spray passage.

Furthermore, the cooling portion may be disposed at a bottom portion of the housing.

Furthermore, the spray portion may be disposed at a top portion of the housing.

Furthermore, the spray portion may further include, in the spray passage, a spray nozzle through which the coolant is sprayed.

Furthermore, the battery pack having the ignition delay structure may further include a first valve configured to control inflow of the coolant into the cooling passage.

Furthermore, the battery pack having the ignition delay structure may further include a second valve configured to control inflow of the coolant into the spray passage.

Furthermore, the coolant may flow into the cooling passage as the first valve is open and the second valve is closed, and the coolant may flow into the spray passage as the first valve is closed and the second valve is open.

Furthermore, the coolant introduced from the coolant inlet may flow into the cooling passage as the first valve is open and the second valve is closed, and the coolant introduced from the coolant inlet may flow into the spray passage as the first valve is closed and the second valve is open.

Furthermore, the battery pack having the ignition delay structure may further include a first coolant inflow passage configured to guide the coolant from the coolant inlet to the cooling passage; and a second coolant inflow passage configured to guide the coolant from the coolant inlet to the spray passage.

Furthermore, the first valve may be disposed in the first coolant inflow passage and the second valve may be disposed in the second coolant inflow passage.

Furthermore, the second coolant inflow passage may be connected to the first coolant inflow passage.

Furthermore, the second coolant inflow passage may be connected to the first coolant inflow passage in upstream of the first valve.

Furthermore, the battery pack having the ignition delay structure may further include a first coolant outflow passage configured to guide the coolant from the cooling passage to the coolant outlet; and a second coolant outflow passage configured to guide the coolant from the spray passage to the coolant outlet.

Furthermore, the second coolant outflow passage may be connected to the first coolant outflow passage.

### [EFFECT OF THE INVENTION]

A battery pack having an ignition delay structure according to the present disclosure has the effect of delaying a heat transfer speed and preventing chain ignition of adjacent battery modules when some battery modules in a battery pack ignite.

### BRIEF DESCRIPTION OF THE DRAWINGS

FIG. 1 is a view illustrating a conventional battery pack.
FIG. 2 is a view illustrating ignition of some battery modules in FIG. 1.
FIG. 3 is a view illustrating a battery pack having an ignition delay structure according to the present disclosure.
FIG. 4 is a perspective view illustrating a battery module according to the present disclosure.
FIG. 5 is an exploded perspective view illustrating a battery module according to the present disclosure.
FIG. 6 is a perspective view illustrating a battery cell according to the present disclosure.
FIG. 7 is a view illustrating a coolant being sprayed in a battery pack having an ignition delay structure according to the present disclosure.
FIG. 8 is a view illustrating a cooling line of a cooling portion and a spray line of a spray portion as a flow path of a coolant according to the present disclosure.

### DETAILED DESCRIPTION

The advantages and features of the present disclosure and methods for achieving them will become clear by referring to the aspects described in detail below along with the accompanying drawings. However, the present disclosure is not limited to the aspects disclosed below and will be implemented in various different forms, the present aspects only serve to ensure that the present disclosure is complete, it is provided to fully inform those who have common knowledge in the technical field to which the present disclosure pertains, and the present disclosure is to be only defined by the scope of the claims. Accordingly, in some aspects, well-known process steps, well-known device structures, and well-known techniques are not specifically described in order to avoid ambiguous interpretation of the present disclosure. Like reference numerals refer to like elements throughout the specification.

In order to clearly express multiple layers and areas in the drawing, the thickness may be enlarged. Throughout the specification, similar parts are given the same reference numerals. When a part of a layer, film, region, plate and the like is said to be "on" another part, this includes not only being "directly on" another part, but also cases where there is another part therebetween. Conversely, when a part is said to be "directly on" another part, it means that there is no other part therebetween. Additionally, when a part of a layer, film, region, plate and the like is said to be "beneath" another part, this includes not only cases where it is "directly below" another part, but also cases where there is another part therebetween. Conversely, when a part is said to be "directly below" another part, it means that there is no other part therebetween.

A battery pack 2000 having an ignition delay structure according to the present disclosure will be described in detail with reference to the drawings.

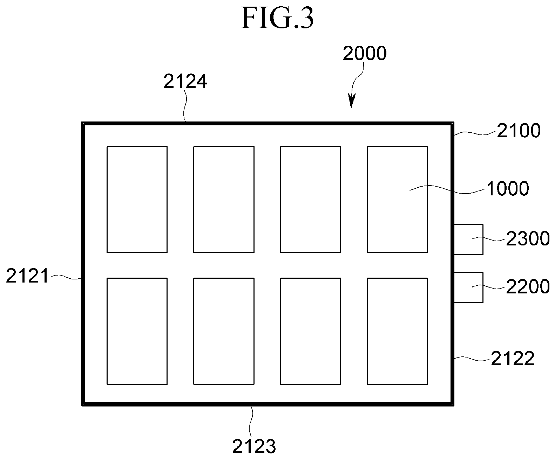

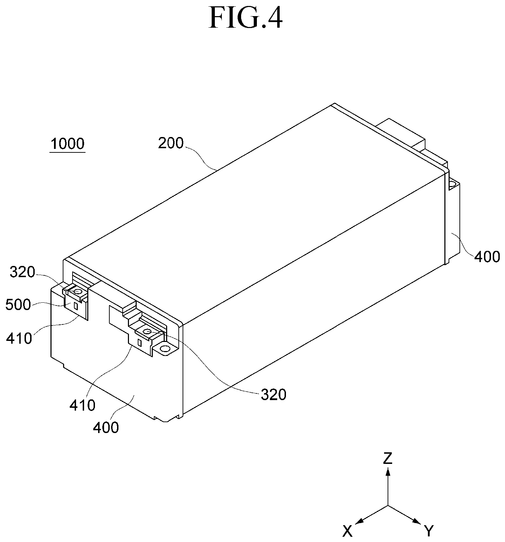

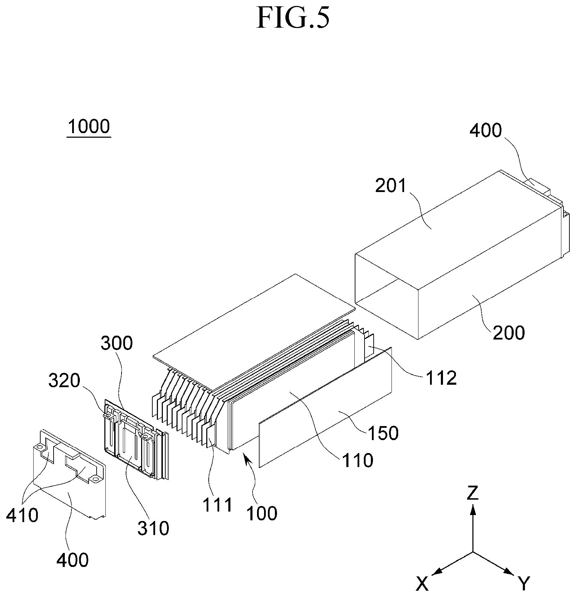

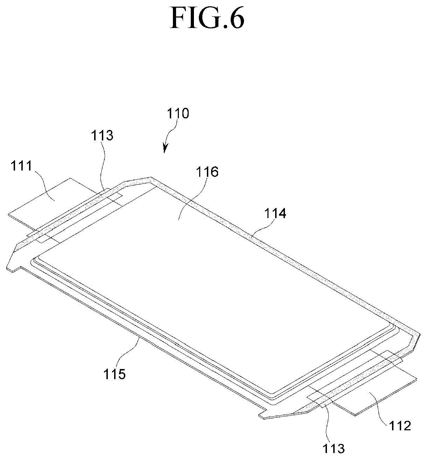

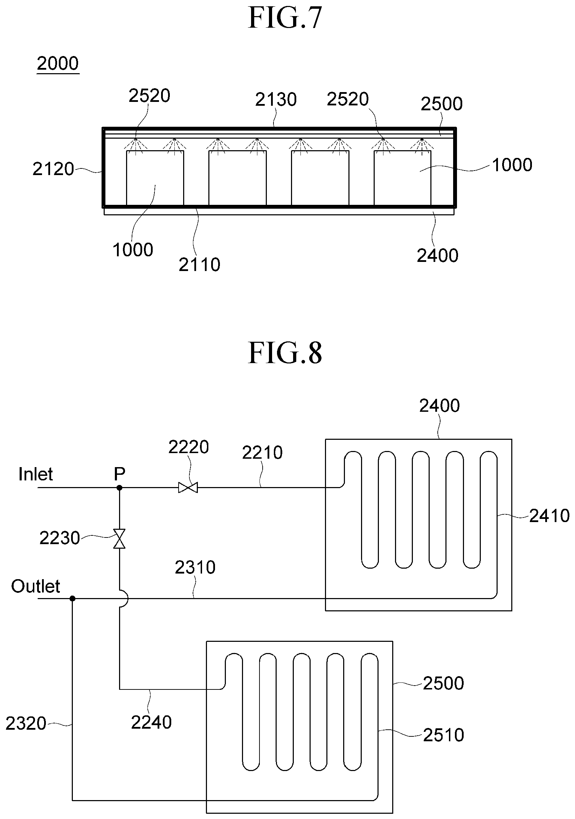

FIG. 3 is a view illustrating a battery pack having an ignition delay structure according to the present disclosure, FIG. 4 is a perspective view illustrating a battery module according to the present disclosure, FIG. 5 is an exploded perspective view illustrating a battery module according to the present disclosure, FIG. 6 is a perspective view illustrating a battery cell according to the present disclosure, FIG. 7 is a view illustrating a coolant being sprayed in a battery pack having an ignition delay structure according to the present disclosure, and FIG. 8 is a view illustrating a cooling line of a cooling portion and a spray line of a spray portion as a flow path of a coolant according to the present disclosure.

The battery pack 2000 having an ignition delay structure according to an aspect of the present disclosure may include one or more battery modules 1000, and a housing 2100 accommodating the battery modules 1000.

The housing 2100 may accommodate the plurality of battery modules 1000, and may include a bottom portion 2110, a side portion 2120, and a top portion (top cover) 2130, as illustrated in FIGS. 3 and 7.

The bottom portion 2110 of the housing 2100 may form a bottom of the housing 2100, extending in a horizontal direction in a plate shape.

The side portion 2120 of the housing 2100 which forms a side surface of the housing 2100 may include a left side portion 2121 forming a left side surface of the housing 2100, a right side portion 2122 forming a right side surface of the housing 2100, a front portion 2123 forming a front surface of the housing 2100, and a rear portion 2124 forming a rear surface of the housing 2100.

Accordingly, in the side portion 2120, the left side portion 2121 and the right side portion 2122 may be disposed at left and right edges of the bottom portion 2110, respectively, and the front portion 2123 and the rear portion 2124 may be disposed at front and rear edges of the bottom portion 2110, respectively.

In this aspect, the housing 2100 is illustrated as a quadrangular box shape, but aspects are not limited thereto, and the housing 2100 may be configured in various shapes including polygons.

The top portion (top cover) 2130 may be arranged at an upper portion of the housing 2100 and may cover the inside of the housing 2100, extending horizontally in the form of a plate. The top portion 2130 may be connected to an upper end of the side portion 2120, and specifically, an edge of the top portion 2130 may be coupled using a bolt or the like to upper ends of the left side portion 2121, the right side portion 2122, the front portion 2123, and the rear portion 2124 constituting the side portion 2120.

In addition, although not illustrated, a separation wall (not illustrated) may be arranged on the bottom portion 2110 between each battery module 1000.

The battery module 1000 may include a battery cell stack 100 in which a plurality of battery cells 110 are stacked along a direction, a module case 200 accommodating the battery cell stack 100, a busbar frame 300 disposed on a front surface and/or a rear surface of the battery cell stack 100, an end plate 400 cover the front surface and/or the rear surface of the battery cell stack 100, and busbars 310, 320 mounted on the busbar frame 300.

The battery cell stack 100 may be formed by stacking the plurality of battery cells 110 along a direction, and the plurality of battery cells 110 may be electrically connected to each other. The direction in which the plurality of battery cells 110 are stacked may be an X-axis direction (or a -X-axis direction) in FIG. 5.

A direction from the front surface to the rear surface of the battery cell stack 100, or an opposite direction thereto, may be defined as a longitudinal direction of the battery cell stack 100, and may be a Y-axis direction in the drawing. In addition, a direction from an upper surface to a lower surface of the battery cell stack 100, or an opposite direction thereto, may be defined as a width direction of the battery cell stack 100, and may be a Z-axis direction in the drawing.

The longitudinal direction of the battery cell stack 100 may be substantially the same as a longitudinal direction of the battery cell 110. Electrode leads 111, 112 of the battery cell 110 may be disposed on the front surface and the rear surface of the battery cell stack 100, and the busbars 310, 320 of the battery module 1000 may be arranged close to the front surface and the rear surface of the battery cell stack 100 to readily form an electrical connection with the electrode leads 111, 112.

The battery cell 110 may be provided as a pouch-type battery cell, and the number of battery cells stacked per unit area may be maximized in the pouch-type battery cell. However, the battery cell 110 does not necessarily have to be provided in a pouch-type, and may be provided in a polygonal, cylindrical, or other various shapes.

The battery cell 110 provided in a pouch-type may include an electrode assembly and a cell case 115 accommodating the electrode assembly (see FIG. 6).

The cell case 115 of the battery cell 110 may be a pouch-type cell case 115 for accommodating the electrode assembly. The cell case 115 may include a lower case and an upper case covering the lower case, and the upper and lower cases may be formed unitarily as one piece. In addition, as illustrated in FIG. 6, connecting portions of the upper and lower cases may be formed in a structure in which they are bent and folded. In addition, as illustrated, the upper case may completely cover the lower case, and a sealing portion 114 may be formed in a peripheral area.

The upper and lower cases may both be formed in a laminate structure including an inner cover layer, a metal layer, and an outer cover layer. The inner cover layer which is located at the inner side the cell case 115 with respect to the metal layer may be required to have insulation and electrolytic resistance because it directly contacts the electrode assembly and to have sealing properties to be sealed from the outside, that is, a sealing portion where inner layers are thermally attached should have excellent thermal bonding strength. The metal layer located between the inner cover layer and the outer cover layer serves as a barrier layer that prevents moisture or various gases from penetrating into the battery from the outside, and a preferable material for the metal layer in contact with the inner cover layer may use an aluminum (Al) thin film that is lightweight and has excellent formability. The outer cover layer is located at the outer side of the cell case 115 with respect to the metal layer, and the outer cover layer may use a heat-resistant polymer with excellent characteristics in terms of tensile strength, moisture permeability, and air permeability to protect the electrode assembly while ensuring heat resistance and chemical resistance, and for example, nylon or polyethylene terephthalate may be used.

An accommodation recess 116 may be formed in each of the upper and lower cases, and the electrode assembly may be accommodated in the accommodation recess 116 of the upper and lower cases.

The electrode assembly accommodated in the cell case 115 may be one of the group consisting of a jelly-roll type electrode assembly having a structure in which a separator is disposed between elongated sheet-shaped anode and cathode and then rolled up, a stack type electrode assembly consisting of unit cells having a structure in which rectangular anode and cathode are stacked with a separator disposed therebetween, a stack-folding type electrode assembly in which unit cells are rolled up by an elongated separator film, and a lamination-stack type electrode assembly in which unit cells are stacked with a separator disposed therebetween and attached to each other.

In addition, the electrode assembly may include two electrode tabs and two electrode leads 111, 112 connected to the electrode tabs, respectively, by a welding portion.

One electrode lead 111 or 112 of the two electrode leads 111, 112 may be an anode lead connected to an anode tab, and the other electrode lead 111 or 112 may be a cathode lead connected to a cathode tab.

A lead film 113 may be attached to each of the electrode leads 111, 112. The lead film 113 coupled to the electrode leads 111, 112 may be disposed between the electrode leads 111, 112 and the cell case 115 to prevent a short circuit from occurring between the electrode leads 111, 112 and the cell case 115 and to improve sealing force, thereby preventing leakage of an electrolyte and the like.

Although the two electrode leads 111, 112 are illustrated as being disposed on opposite sides of the electrode assembly, respectively, the two electrode leads 111, 112 may be disposed on only one side of the electrode assembly depending on the arrangement of the electrode tabs.

The module case 200 may be configured to protect the battery cell stack 100 and electrical components connected thereto from external physical impact, and the module case 200 may accommodate the battery cell stack 100 and the electrical components connected thereto in an internal space of the module case 200.

A structure of the module case 200 may vary, and for example, the structure of the module case 200 may be a mono-frame structure. Here, the mono-frame may be in the form of a metal plate in which an upper surface, a lower surface, and opposite side surfaces are unitarily formed. The mono-frame may be manufactured by extrusion molding. As another example, the module case 200 may have a structure in which a U-shaped frame and an upper plate (upper surface) 201 are coupled to each other. In the case of the structure in which the U-shaped frame and the upper plate are coupled to each other, the structure of the module case 200 may be formed by coupling the upper plate onto an upper side of the U-shaped frame which is a metal plate where a lower surface and opposite side surfaces are coupled to each other or unitarily formed, and each frame or plate may be manufactured by press molding. In addition, the structure of the module case 200 may be provided as an L-shaped frame structure in addition to the mono-frame or the U-shaped frame, and may be provided as various structures not described in the above-described examples.

The structure of the module case 200 may be provided in the form that is open along the longitudinal direction of the battery cell stack 100. The front and rear surfaces of the battery cell stack 100 may not be covered by the module case 200. The electrode leads 111, 112 of the battery cell 110 may not be covered by the module case 200. The front and rear surfaces of the battery cell stack 100 may be covered by the busbar frame 300, the end plate 400, or the busbars 310, 320 to be described below, and accordingly, the front and rear surfaces of the battery cell stack 100 may be protected from external physical impacts and the like.

A compression pad 150 may be disposed between the battery cell stack 100 and one side surface of inner surfaces of the module case 200.

The compression pad 150 may be disposed so as to face the battery cell 110 located at an outermost side of the battery cell stack 100 in the y-axis direction in the drawing.

Also, although not illustrated, a thermally conductive resin may be injected between the battery cell stack 100 and the inner surface of the module case 200, and a thermally conductive resin layer (not illustrated) may be formed between the battery cell stack 100 and one side surface of the inner surfaces of the module case 200 by the injected thermally conductive resin. In such a case, the thermally conductive resin layer may be disposed on the Z-axis of the battery cell stack 100, and thermally conductive resin layer may be formed between the battery cell stack 100 and the bottom surface of the module case 200 on the -Z-axis.

The busbar frame 300 may be disposed on one surface of the battery cell stack 100 and may cover one surface of the battery cell stack 100 while guiding connection between the battery cell stack 100 and an external device. Specifically, the busbar frame 300 may be disposed on the front surface or the rear surface of the battery cell stack 100, as illustrated. At least one of the busbars 310, 320 and a module connector may be mounted on the busbar frame 300. As illustrated in FIG. 5, one surface of the busbar frame 300 may be connected to the front surface or the rear surface of the battery cell stack 100, and another surface of the busbar frame 300 may be connected to the busbars 310, 320.

The busbar frame 300 may include an electrically insulating material. The busbar frame 300 may restrict the busbars 310, 320 from contacting other portions of the battery cells 110 other than a portion where the busbars 310, 320 are connected to the electrode leads 111, 112 and may prevent an electrical short circuit from occurring.

The busbar frame 300 may be disposed on each of the front surface and the rear surface of the battery cell stack 100.

The busbars 310, 320 may be mounted on one surface of the busbar frame 300 and may serve to electrically connect the battery cell stack 100 or the battery cells 110 to an external device circuit. The busbars 310, 320 may be disposed between the battery cell stack 100 or the busbar frame 300 and the end plate 400, thereby being protected from external impacts and the like and minimizing degradation of durability due to external moisture and the like.

The busbars 310, 320 may be electrically connected to the battery cell stack 100 through the electrode leads 111, 112 of the battery cell 110.

Specifically, the electrode leads 111, 112 of the battery cell 110 may be bent and connected to the busbars 310, 320 after passing through a slit formed in the busbar frame 300. The battery cells 110 constituting the battery cell stack 100 may be connected in series or in parallel by the busbars 310, 320.

The busbars 310, 320 may include a terminal busbar 320 configured to electrically connect one battery module 1000 to another battery module 1000. At least a portion of the terminal busbar 320 may be exposed to the outside of the end plate 400 to be connected to another battery module 100, and to this end, the end plate 400 may have a terminal opening 410.

Dissimilar to other busbars 310, the terminal busbar 320 may further include a protrusion protruding upward, and the protrusion may be exposed to the outside of the battery module 1000 through the terminal opening 410. The terminal busbar 320 may be connected to another battery module 1000 or a battery disconnect unit (BDU) by the protrusion exposed through the terminal opening 410 and may form a high voltage (HV) connection with them.

The end plate 400 may cover an open surface of the module case 200 to protect the battery cell stack 100 and the electrical components connected thereto from external physical impact. To this end, the end plate 400 may be manufactured from a material having a predetermined strength, and for example, the end plate 400 may include a metal such as aluminum.

The end plate 400 may be coupled to the module case 200 while covering the busbar frame 300 or the busbars 310, 320 located on one surface of the battery cell stack 100. Each corner of the end plate 400 may be coupled to a corresponding corner of the module case 200 by a method such as welding. In addition, an insulation cover 500 for electrical insulation may be located between the end plate 400 and the busbar frame 300. The insulation cover 500 may include an electrical insulating material and may block the busbars 310, 320 from contacting the end plate 400. It may be located on an inner surface of the end plate 400 and may be in close contact with the inner surface of the end plate 400, but this is not necessarily the case.

The end plate 400 may be located on each of front and rear surfaces of the module case 200 so as to cover the front and rear surfaces of the battery cell stack 100.

In addition, the battery pack 2000 according to the present disclosure may further include a coolant inlet 2200, a coolant outlet 2300, a cooling portion 2400 configured to cool the battery module 1000, and a spray portion 2500 configured to spray a coolant to the battery module 1000.

The coolant inlet 2200 may serve to allow the coolant to flow into the battery pack 2000 from the outside, and the coolant may flow into the battery pack 2000 through the coolant inlet 2200 from the outside. As illustrated in FIG. 3, the coolant inlet 2200 may be disposed on one side of the side portion 2120 of the housing 2100, but as another example, the coolant inlet 2200 may be disposed on the top portion 2130 or the bottom portion 2110.

The coolant outlet 2300 may serve to allow the coolant to flow to the outside from the battery pack 2000, and the coolant may flow to the outside from the battery pack 2000 through the coolant outlet 2300. As illustrated in FIG. 3, the coolant outlet 2300 may be disposed on one side of the side portion 2120 of the housing 2100 and may be disposed on one side surface of the housing 2100 where the coolant inlet 2200 is disposed, but as another example, the coolant outlet 2300 may be disposed on the top portion 2130 or the bottom portion 2110.

The cooling portion 2400 may cool the battery module 1000 accommodated in the battery pack 2000 and may include a cooling passage 2410 through which the coolant introduced from the coolant inlet 2200 flows.

The cooling passage 2410 may be formed as a passage through which the coolant flows and may cool the battery module 1000 as the coolant flows through the cooling passage 2410. The cooling passage 2410 may include a zigzag shape as illustrated in FIG. 8 and may also be formed in the form of a duct, a pipe, or the like.

The cooling portion 2400 including the cooling passage 2410 may be disposed at the bottom portion 2110, as illustrated in FIG. 7. The cooling portion 2400 at the bottom portion 2110 may be disposed beneath the bottom portion 2110, as illustrated in FIG. 7. In addition, as another example, the cooling portion 2400 may be disposed in the bottom portion 2110 or on the bottom portion 2110 or may be disposed on the side portion 2120 or the top portion 2130.

A first coolant inflow passage 2210 may be disposed between the coolant inlet 2200 and the cooling passage 2410, and a first valve 2220 may be disposed in the first coolant inflow passage 2210.

The first valve 2220 may open and close the first coolant inflow passage 2210 and control inflow of the coolant into the cooling passage 2410.

Referring to FIG. 8, as a process of the coolant flowing into the cooling portion 2400 according to the present disclosure, the coolant introduced through the coolant inlet 2200 may flow into the cooling passage 2410 of the cooling portion 2400 through the first coolant inflow passage 2210 disposed between the coolant inlet 2200 and the cooling passage 2410 of the cooling portion 2400. The coolant flowing into the cooling passage 2410 may cool the battery module 1000 while flowing through the cooling passage 2410, and then may be discharged to the outside of the battery pack 2000 through the coolant outlet 2300 via the first coolant outflow passage 2310 disposed between the coolant outlet 2300 and the cooling passage 2410.

The first coolant inflow passage 2210, the cooling passage 2410, and the first coolant outflow passage 2310 may be connected to each other to form a single coolant flow path, and the first coolant inflow passage 2210, the cooling passage 2410, and the first coolant outflow passage 2310 may be formed in the form of a duct, a pipe or the like.

The spray portion 2500 may include a spray passage 2510 through which the coolant from the coolant inlet 2200 flows and may spray the coolant to the battery module 1000 when an event such as ignition of the battery module 1000 occurs.

The spray passage 2510 may be formed with a passage through which the coolant flows, and one or more spray holes or spray nozzles 2520 for spraying the coolant may be arranged in the spray passage 2510. Accordingly, while the coolant flows through the spray passage 2510, the coolant may be sprayed to the battery module 1000 through the spray holes or spray nozzles 2520. The plurality of spray holes or spray nozzles 2520 may be spaced apart from each other along the spray passage 2510 and may be arranged above each battery module 1000.

The spray passage 2510 may include a zigzag shape as illustrated in FIG. 8 and may also be formed in the form of a duct, a pipe, or the like.

The spray portion 2500 including the spray passage 2510 may be disposed above the battery module 1000 in the battery pack 2000, as illustrated in FIG. 7. The spray portion 2500 may be spaced apart from the top portion 2130 as illustrated in FIG. 7 or may be disposed below the top portion 2130. In addition, as another example, the spray portion 2500 may be disposed at the side portion 2120 or the bottom portion 2110.

In addition, a second coolant inflow passage 2240 may be disposed between the coolant inlet 2200 and the spray passage 2510, and a second valve 2230 may be disposed in the second coolant inflow passage 2240. As illustrated in FIG. 8, one end of the second coolant inflow passage 2240 may be connected to the first coolant inflow passage 2210, and another end of the second coolant inflow passage 2240 may be connected to the spray passage 2510.

A portion P of the first coolant inflow passage 2210 to which the second coolant inflow passage 2240 is connected may be a portion in the upstream of the first valve 2220.

The second valve 2230 may open and close the second coolant inflow passage 2240 and control inflow of the coolant into the spray passage 2510.

Referring to FIG. 8, as a process of the coolant flowing into the spray portion 2500 according to the present disclosure, the coolant introduced through the coolant inlet 2200 may flow into the spray passage 2510 of the spray portion 2500 through the second coolant inflow passage 2240 disposed between the coolant inlet 2200 and the spray passage 2510 of the spray portion 2500. The coolant introduced into the spray passage 2510 may flow through the spray passage 2510 and may be discharged to the outside of the battery pack 2000 through the coolant outlet 2300 via the second coolant outflow passage 2320 disposed between the coolant outlet 2300 and the spray passage 2510. The second coolant outflow passage 2320 may be connected to the first coolant outflow passage 2310.

The second coolant inflow passage 2240, the spray passage 2510, and the second coolant outflow passage 2320 may be connected to each other to form a single coolant flow path, and the second coolant inflow passage 2240, the spray passage 2510, and the second coolant outflow passage 2320 may be formed in the form of a duct, a pipe, or the like.

According to the present disclosure, in a normal state where the second valve 2230 is closed and the first valve 2220 is open, the coolant flowing in through the coolant inlet 2200 may flow into the cooling passage 2410 through the first coolant inflow passage 2210, and cool the battery module 1000 while flowing through the cooling passage 2410, and then be discharged through the coolant outlet 2300 via the first coolant outflow passage 2310.

If an event such as ignition, abnormal temperature or pressure increase, or heat detection occurs, the first valve 2220 switches from the open state to a closed state, and the second valve 2230 switches from the closed state to an open state. As such, when the first valve 2220 is closed and the second valve 2230 is open, the coolant flows into the second coolant inflow passage 2240 and then flows into the spray passage 2510. While flowing along the spray passage 2510, the coolant is sprayed to the battery module 1000 through the spray hole or spray nozzle 2520, and the remaining coolant may be discharged through the coolant outlet 2300 via the second coolant outflow passage 2320.

The battery pack 2000 according to the present disclosure has the above-described ignition delay structure, and accordingly, in the normal state, the coolant may cool the battery module 1000 while flowing along the cooling passage 2410, and in the event of an ignition or the like, the coolant may flow through the spray passage 2510 to be directly sprayed to the battery module 1000, thereby delaying the heat transfer phenomenon and preventing chain ignition.

In the above-described aspect, the coolant introduced through the coolant inlet 2200 was introduced into the cooling passage 2410 or the spray passage 2510 by opening and closing of the first valve 2220 and the second valve 2230, but in another aspect, the coolant may be introduced into the cooling passage 2410 or the spray passage 2510 by a single valve. In such a case, a valve may be disposed at a portion P where the second coolant inflow passage 2240 is connected to the first coolant inflow passage 2210, and a two-way valve may be used as this valve.

Meanwhile, the battery pack 2000 according to the present disclosure may further include a sensor, and the sensor may be a temperature sensor, a heat detection sensor, a pressure sensor and the like. Through such a sensor, ignition may be detected, and when ignition is detected, the coolant may be directly sprayed to the battery module 1000 as described above.

Although the present disclosure has been described as the coolant introduced from the coolant inlet 2200 is introduced into the cooling portion 2400 and the spray portion 2500 and flows, but instead of the coolant, a refrigerant may be introduced and serve the same function while flowing through the cooling portion 2400 and the spray portion 2500.

The battery pack according to the present disclosure may additionally include various control and protection systems such as a battery management system (BMS) and a cooling system.

The battery module 1000 and the battery pack 2000 according to the present disclosure may be applied to various devices. Specifically, the battery module may be applied to means of transportation such as an electric bicycle, an electric vehicle, a hybrid vehicle, or an energy storage system (ESS), but aspects are not limited thereto, and the battery module may be applied to various devices that may use secondary batteries.

The present disclosure has been described with reference to preferred aspects as described above, but it is not limited to the above aspects, and various changes and modifications may be made by those skilled in the art to which the present disclosure pertains within the scope that does not depart from the spirit of the present disclosure.

### [INDUSTRIAL APPLICABILITY]

The present disclosure provides a battery pack that may delay a heat transfer speed and prevent chain ignition of adjacent battery modules when some battery modules in a battery pack ignite.

## Claims

1. A battery pack having an ignition delay structure, comprising:
one or more battery modules;
a housing accommodating the one or more battery modules;
a cooling portion configured to cool the one or more battery modules as a coolant flows; and
a spray portion configured to spray coolant to the one or more battery modules.

2. The battery pack having the ignition delay structure according to claim 1, further comprising:
a coolant inlet configured to receive coolant into the battery pack; and
a coolant outlet configured to discharge coolant from the battery pack.

3. The battery pack having the ignition delay structure according to claim 2, wherein the coolant inlet and the coolant outlet are each disposed in the housing.

4. The battery pack having the ignition delay structure according to claim 1, wherein, when in a normal state, coolant is configured to flow into the cooling portion, and
when an abnormal event occurs, the coolant is configured to flow into the spray portion instead of the cooling portion.

5. The battery pack having the ignition delay structure according to claim 1, wherein the cooling portion includes a cooling passage through which coolant is configured to flow, and
the spray portion includes a spray passage through which coolant is configured to flow.

6. The battery pack having the ignition delay structure according to claim 5, further comprising: a valve configured to selectively supply coolant from the coolant inlet to the cooling passage or the spray passage.

7. The battery pack having the ignition delay structure according to claim 5, wherein the cooling portion is disposed at a bottom portion of the housing.

8. The battery pack having the ignition delay structure according to claim 5, wherein the spray portion is disposed at a top portion of the housing.

9. The battery pack having the ignition delay structure according to claim 5, wherein the spray portion further includes, in the spray passage, a spray nozzle through which coolant is configured to be sprayed.

10. The battery pack having the ignition delay structure according to claim 5, further comprising:
a first valve configured to control inflow of coolant into the cooling passage.

11. The battery pack having the ignition delay structure according to claim 10, further comprising: a second valve configured to control inflow of coolant into the spray passage.

12. The battery pack having the ignition delay structure according to claim 11, wherein coolant is configured to flow into the cooling passage when the first valve is open and the second valve is closed, and
coolant is configured to flow into the spray passage when the first valve is closed and the second valve is open.

13. The battery pack having the ignition delay structure according to claim 12, wherein coolant introduced from the coolant inlet is configured to flow into the cooling passage when the first valve is open and the second valve is closed, and
coolant introduced from the coolant inlet is configured to flow into the spray passage when the first valve is closed and the second valve is open.

14. The battery pack having the ignition delay structure according to claim 5, further comprising:
a first coolant inflow passage configured to guide coolant from the coolant inlet to the cooling passage; and
a second coolant inflow passage configured to guide coolant from the coolant inlet to the spray passage.

15. The battery pack having the ignition delay structure according to claim 14, wherein the second coolant inflow passage is connected to the first coolant inflow passage.

16. The battery pack having the ignition delay structure according to claim 14, further comprising:
a first valve configured to control inflow of coolant into the cooling passage; and
a second valve configured to control inflow of coolant into the spray passage,
wherein the first valve is disposed in the first coolant inflow passage, and
the second valve is disposed in the second coolant inflow passage.

17. The battery pack having the ignition delay structure according to claim 16, wherein the second coolant inflow passage is connected to the first coolant inflow passage upstream of the first valve.

18. The battery pack having the ignition delay structure according to claim 5, further comprising:
a first coolant outflow passage configured to guide coolant from the cooling passage to the coolant outlet; and
a second coolant outflow passage configured to guide coolant from the spray passage to the coolant outlet.

19. The battery pack having the ignition delay structure according to claim 18, wherein the second coolant outflow passage is connected to the first coolant outflow passage.
